# EUROPEAN PATENT SPECIFICATION

(11) **EP 3 863 157 B1**
(45) Date of publication and mention of the grant of the patent: **27.08.2025**
(21) Application number: 20155327.8
(22) Date of filing: 04.02.2020
(51) Int. Cl.: H02K 5/22

(54) **COVER FOR CLOSING A HOUSING OF AN ELECTRICAL MACHINE**
DECKEL ZUM VERSCHLIESSEN EINES GEHÄUSES EINER ELEKTRISCHEN MASCHINE
COUVERCLE DE FERMETURE D'UN BOÎTIER D'UNE MACHINE ÉLECTRIQUE

(43) Date of publication of application: 11.08.2021
(60) Divisional application: 25187338.6
(73) Proprietor: Mahle International GmbH, 70376 Stuttgart (DE)
(72) Inventor: JERIC, Mitja, 6223 Komen (SI); RUTAR, Erik, 5251 Grgar (SI)
(74) Representative: BRP Renaud & Partner mbB Rechtsanwälte Patentanwälte Steuerberater

(56) References cited:
- WO-A1-2019/135377
- US-A1- 2009 267 430
- US-A1- 2017 100 984
- US-B2- 7 498 702

## Description

The invention relates to a cover for closing a housing of an electrical machine as well as to an electrical machine comprising a cover of this type. The invention further relates to a method for producing such a cover as well as to a method for producing an electrical machine comprising a cover of this type.

For some time, electrical machines, in particular electric motors for an electrical power assisted steering of a motor vehicle, are being embodied with covers, by means of which a housing of the electrical machine which has a stator comprising stator windings is axially closed or covered, respectively. To be able to supply the stator windings of the stator, which is arranged in the housing being closed by means of the cover, with electrical energy, electrical conductor elements, via which the stator windings can be connected to an external current source, are routinely provided at such covers. Such electrical conductor elements are also known to the person of skill in the art under the term "bus bars".

In the case of such conventional electrical machines, it is to thereby be considered to be a disadvantage that the cover, the bus bars as well as possible fastening means for fastening the bus bars to the cover require an undesirably high number of parts of the electrical machine. A high number of parts, in turn, requires complex mounting processes for the assembly of an electrical machine, which has an unfavorable effect on the production costs of the electrical machine. In addition, such complex mounting processes are typically prone to errors, which negatively impacts the quality assurance in the production of such electrical machines.

US 2009/0267430 A1 discloses an electric power steering apparatus. The apparatus comprises an electric motor to be connected to a control unit through bus bars respectively projected from the inside of the electric. The control unit is fixed to a fixing base which is structured as a composing element of the electric motor, and the fixing base covers the connecting portion between the bus bars and control unit.

Document US2017100984 discloses a related cover.

It is thus an object of the present invention to show new ways for covers for closing a housing of an electrical machine, for such electrical machines, as well as for methods for producing a cover of this type and for methods for producing an electrical machine of this type - in particular for eliminating the above-mentioned disadvantages.

This object is solved by the subject matter of the independent patent claims. Preferred embodiments are subject matter of the dependent patent claims.

It is thus the basic idea of the invention to provide a cover for closing a housing of an electrical machine, in the case of which bus bars for electrically connecting stator windings of a stator to an external electrical current source are embedded in an electrically insulating lid material of a lid body of the cover, namely in such a way that the bus bars are electrically insulated from one another by means of the electrically insulating lid material.

Advantageously, this has the result that the lid body of the electrically insulating lid material and the bus bars embedded in the lid material are encompassed by the cover for closing the housing of an electrical machine as a structural unit. Such a structural unit formed by means of the cover can be handled particularly well in a mounting process for producing an electrical machine, which reduces a complexity of the mounting processes for producing such an electrical machine in an advantageous manner, and which simultaneously lowers the associated production costs in an advantageous manner. In addition, the embedding of the bus bars in the electrically insulating lid material of the lid body of the cover makes separate fastening means for fastening the bus bars to the lid body obsolete, which also has a reducing effect on the number of parts of the electrical machine, on the mounting effort, as well as on the production costs of the electrical machine.

A cover according to the invention for closing a housing of an electrical machine, wherein the electrical machine is preferably an electric motor for an electrical power assisted steering of a motor vehicle, comprises a lid body of an electrically insulating lid material. The cover further comprises at least two, preferably three, bus bars, each of which has a first electrical connection and two second electrical connections. The bus bars are thereby each formed in such a way that the first and the second electrical connections of a respective one of the bus bars are electrically connected to one another by means of the respective bus bar. The bus bars are embedded in the electrically insulating lid material of the lid body of the cover in such a way that the bus bars are electrically insulated from one another by means of the electrically insulating lid material. The electrically insulating lid material is preferably a plastic, particularly preferably a PA66 GF35. Advantageously, such a cover forms a cohesive structural unit, which can be handled particularly easily for mounting an electrical machine comprising such a cover. In addition, it follows from the embedding of the bus bars in the electrically insulating lid material of the lid body that additional fastening means for fastening the bus bars as well as additional insulators for insulating the bus bars from one another can be forgone, which has a cost-lowering impact on the cover and also on the electrical machine comprising such a cover.

Advantageously, the bus bars are each at least partially surrounded by the electrically insulating lid material. Advantageously, a particularly reliable electrical insulation of the bus bars from one another as well as a particularly reliable fastening of the bus bars to the lid body of the cover can thus be attained.

In the case of a preferred further development of the cover, each of the bus bars in each case extends along a bar direction, preferably essentially linearly at least in some areas, most preferably completely linearly. This means that the bar directions of the bus bars differ from one another or that each bus bar runs along an independent bar direction, respectively. The bar direction of each individual bus bar runs at an angle to the bar directions of the at least one, in particular two, other bus bars. Bus bars of this type, which are in particular formed linearly, can be made particularly cost-efficiently of a straight, in particular planar, semi-finished product of an electrically conductive material in an advantageous manner.

According to another preferred further development of the cover, the second electrical connections of at least one of the bus bars are arranged at two connection ends of this bus bar, which are located opposite one another in the bar direction of the respective bus bar. Advantageously, the second electrical connections of each of the bus bars are arranged at two connection ends of this bus bar located opposite one another in the bar direction of the respective bus bar. This makes it possible in an advantageous manner that the bus bars can be embedded particularly well in the electrically insulating lid material in an area between the two connection ends, because an electrical contacting option of the bus bars away from the connection ends is not required.

According to a preferred further development of the cover, the first electrical connection of at least one of the bus bars in the bar direction of the respective bus bars is arranged between the two second electrical connections of this bus bar. Advantageously, the first electrical connections of each of the bus bars in the bar direction of the respective bus bar is arranged between the two second electrical connections of this bus bar. This provides a design of the bus bars, which can be implemented particularly easily in terms of construction.

In the case of another further development of the cover, the bus bars each have a bar body, which encompasses the connection ends of this bus bar located opposite one another in the bar direction of the respective bus bar. The bar body thereby connects the second electrical connections of the respective bus bar in an electrically conductive manner. The first electrical connection of this bus bar is arranged between the second electrical connections of a respective one of the bus bars. The first electrical connection thereby protrudes at an angle, particularly preferably essentially perpendicular, to the bar direction of the respective bus bar from the bar body thereof. Such bus bars can be produced particularly cost-efficiently from a planar semi-finished product, in particular from sheet metal, wherein the first electrical connection has to be separated only partially from the bar body and has to be bent away therefrom in an angular manner.

Advantageously, the bus bars are arranged on top of one another in a stack-like manner in an axial direction of the cover. Two adjacent bus bars are arranged at a distance in the axial direction as to form a gap which is at least partially filled with the electrically insulating lid material.

In the case of another preferred further development of the cover, the bar directions of the bus bars cross one another, when looking in the axial direction in such a way that the bar directions of each individual one of the bus bars, viewed in the axial direction, intersects the, in particular two, bar direction/s of the, in particular two, remaining bus bar/s, in each case at a, in particular different, point of intersection. This advantageously provides for a particularly installation space-saving option for arranging the second connections of the bus bars equidistantly along a circumferential direction of the cover.

According to a preferred further development of the cover, the first electrical connection of at least one of the bus bars protrudes from the cover along the axial direction. Advantageously, the first electrical connection of each of the bus bars protrudes from the cover along the axial direction. This provides for a particularly installation space-saving line guide of electrical lines for connecting the first electrical connections to an external current source in an advantageous manner.

According to an advantageous further development, a connection section of a stator winding of an electrical machine can in each case be electrically connected to the two second electrical connections of at least one of the bus bars. Advantageously, a connection section of a stator winding of an electrical machine can in each case be electrically connected to the two second electrical connections of each of the bus bars. A connection section of a stator winding of an electrical machine can thereby be electrically connected to the two second electrical connections in such a way that the stator windings, which can be connected to the respective bus bar, are arranged in the manner of an electrical parallel connection to the first electrical connection of this bus bar. This provides the advantage that a plurality of stator windings can be electrically connected to an electrical phase of a multi-phase electrical current source by means of a respective one of the bus bars.

An aperture in which a connection section of an electrical stator winding can be accommodated, is advantageously formed in the respective bus bar for forming at least one of the second connections of at least one of the bus bars. This provides a particularly advantageous option for connecting a connection section of an electrical stator winding electrically to the at least one of the second connections of at least one of the bus bars. Such an electrical connecting is preferably realized by means of a solder or welded connection.

According to a preferred further development, the lid body of the cover comprises a bearing, in which a rotor of an electrical machine can be rotatably supported, and which is advantageously also fastened to the lid body. The bearing preferably is overmolded by the lid material forming the cover. Advantageously, at least a further component, which is separate in the case of conventional electrical machines, is encompassed by the cover as a structural unit, which improves a complexity of the mounting in response to the production of an electrical machine in a cost-lowering manner.

In addition, the invention relates to an electrical machine, which is preferably an electric motor for an electrical power assisted steering of a motor vehicle. The electrical machine comprises a housing by which a stator is housed, at which stator windings are present. Each of the stator windings thereby has a connection section, via which the respective stator winding can be electrically energized. The electrical machine further comprises a cover according to the invention according to the above description, which closes the housing. A connection section of one of the stator windings is thereby in each case electrically connected to each of the second electrical connections of each of the bus bars of the cover. The above-shown advantages of the cover according to the invention also transfer mutatis mutandis to the electrical machine according to the invention comprising a cover of this type.

The invention furthermore relates to a method for producing a cover according to the invention according to the above description. This method comprises a measure, which consists of an arranging of at least two, preferably three, bus bars each having a first electrical connection and two electrical second connections. The electrical connections of a respective one of the bus bars are electrically connected to one another by means of this bus bar. The method furthermore comprises a further measure, according to which a lid body of an electrically insulating lid material is molded in such a way that the bus bars are embedded in the lid material of the lid body. Particularly advantageously, the embedding of the bus bars in the electrically insulating lid material of the lid body by means of molding takes place by means of injection molding. In response to the molding, the bus bars are embedded in the lid material of the lid body in such a way that the bus bars are electrically insulated from one another by means of the electrically insulating lid material in the cover created after the molding of the lid body. The above-shown advantages of the cover according to the invention or of the electrical machine according to the invention, respectively, comprising such a cover also transfer analogously to the method according to the invention for producing such a cover.

In addition, the invention relates to a method for producing an electrical machine according to the invention, which is preferably an electric motor for an electrical power assisted steering of a motor vehicle, and which is described above. This method comprises a measure, according to which a cover according to the invention according to the above description is provided, which is preferably produced by means of the method according to the invention according to the above description. A further measure of the method for producing the electrical machine consists in a provision of a housing of the electrical machine, wherein at a stator of the electrical machine electrical stator windings each comprising a connection section are present. The stator windings can thereby each be electrically energized via the connection section thereof. According to a further measure of the method for producing the electrical machine, the cover is arranged at the housing, so that the housing is closed by means of the cover. In the case of a further measure of the method for producing the electrical machine, the connection section of a respective one of the stator windings is electrically connected to one of the second electrical connections of one of the bus bars. This electrical connecting advantageously takes place by means of a welding or by means of a soldering. The electrical connecting thereby takes place in such a way that the stator windings, which are connected to one of the bus bars, are arranged in the manner of a parallel connection to the first electrical connection of this one of the bus bars. The above-shown advantages of the cover according to the invention, of the electrical machine according to the invention comprising a cover of this type, as well as of the method according to the invention for producing a cover of this type also transfer analogously to the method according to the invention for producing an electrical machine of this type.

Further important features and advantages of the invention follow from the subclaims, from the drawings, and from the corresponding figure description on the basis of the drawings.

**It** goes without saying that the above-mentioned features and the features, which will be described below, cannot only be used in the respective specified combination, but also in other combinations or alone, without leaving the scope of the present invention.

Preferred exemplary embodiments of the invention are illustrated in the drawings and will be described in more detail in the following description, whereby identical reference numerals refer to identical or similar or functionally identical components.

In each case schematically,
- Fig. 1: shows an example of a cover according to the invention for closing a housing of an electrical machine in a top view opposite an axial direction,
- Fig. 2: shows a perspective exploded illustration of the example of Fig. 1,
- Fig. 3: shows an example of an electrical machine according to the invention comprising an exemplary cover according to the invention in a perspective illustration,
- Fig. 4: shows a method according to the invention for producing a cover according to the invention in an exemplary manner in a block diagram, as well as a method for producing an electrical machine according to the invention in an exemplary manner.

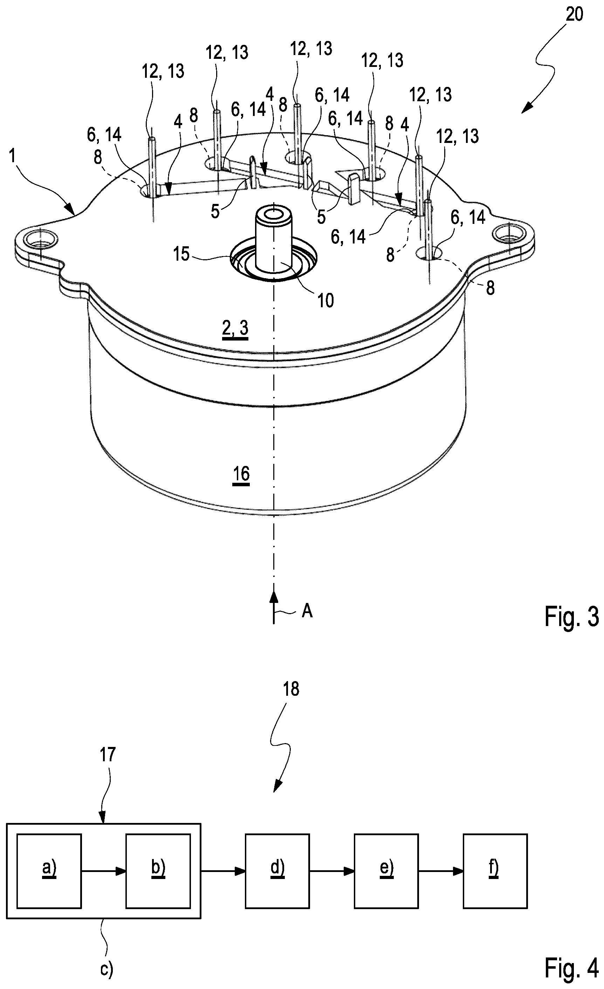

An example of an electrical machine 20 according to the invention is shown in a perspective illustration in Figure 3, which is advantageously an electric motor for an electrical power assisted steering of a motor vehicle. The electrical machine 20 has a housing 16. A stator of the electrical machine 20 comprises stator windings 13, which can be electrically energized over a connection section 12 each. According to the shown example, the electrical machine 20 can comprise a rotor 10, rotatable relative to the stator. In addition, the electrical machine 20 has a cover 1 according to the invention, which is also shown in an exemplary manner in Figure 3, by means of which the housing 16 is closed. This means that an interior of the housing 16, which cannot be seen in Figure 3 and in which the rotor 10 is arranged, is closed in an axial direction A by means of the cover 1, as can be seen clearly in the shown example.

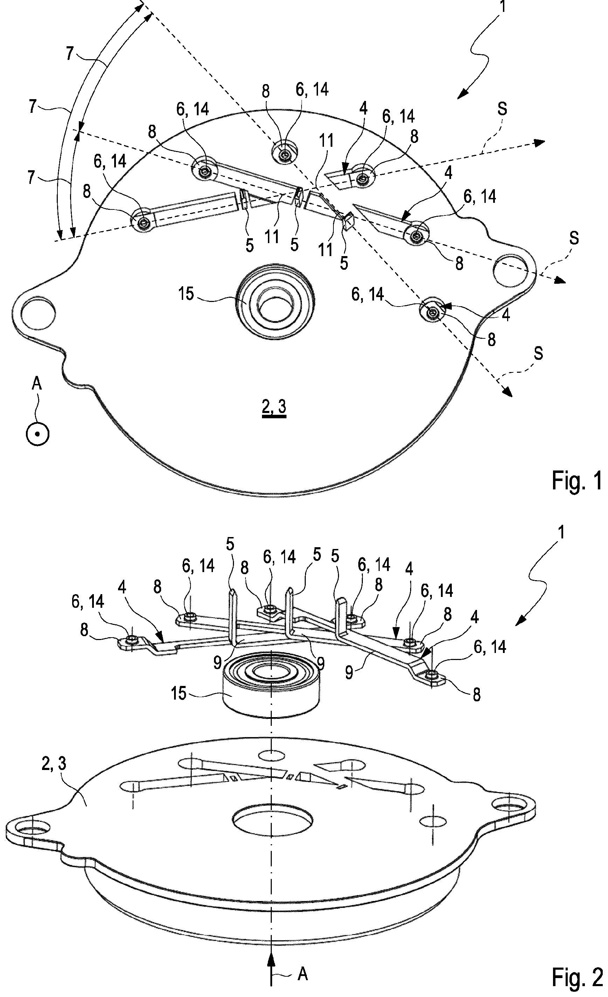

In a perspective exploded illustration, Figure 2 shows an example of a cover 1 according to the invention for closing the housing 16 of the electrical machine 20. The cover 1 thus comprises a lid body 2 of an electrically insulating lid material 3. The lid material 3 can advantageously be a plastic. In addition, the cover 1 has at least two bus bars 4. In the shown example three of such bus bars 4 are present. Each of the bus bars 4 comprises a first electrical connection 5 and two second electrical connections 6. The first and second electrical connections 5, 6 of a respective one of the bus bars 4 are electrically connected to one another by means of this bus bar 4.

In a top view opposite the axial direction, Figure 1 illustrates an example of a cover 1 according to the invention, wherein, contrary to Figure 2, the components of the cover 1 are illustrated in installation position here. It can be seen that the bus bars 4 are embedded in the electrically insulating lid material 3. The bus bars 4 are thereby embedded in the electrically insulating lid material 3 in such a way that the bus bars 4 are electrically insulated from one another by means of the electrically insulating lid material 3. According to the example, the bus bars 4 are in each case at least partially surrounded by the electrically insulating lid material. Figure 1 further shows that each bus bar 4 extends essentially linearly. Each of the bus bars 4 thereby in each case extends linearly along a bar direction S assigned to the respective bus bar 4. The bus bars 4 are thereby arranged in such a way that the bar direction S of each individual bus bar 4 runs at an angle 7 to the bar directions S of the two other bus bars 4.

It can be understood on the basis of Figure 2 that the second electrical connections 6 of at least one of the bus bars 4 are arranged at two connection ends 8 of this bus bar 4 located opposite one another in the bar direction S of the respective bus bar 4. According to the example shown in Figures 1 and 2, each of the bus bars 4 is formed with second electrical connections 6 of this type, which are arranged at two connection ends 8 of this bus bar 4 located opposite one another in the bar direction S of the respective bus bar 4. The first electrical connection 5 of at least one of the bus bars 4 in the bar direction S of the respective bus bar 4 is arranged between the two second electrical connections 6 of this bus bar 4. According to the shown example, all of the bus bars 4 are formed in such a way that the first electrical connection 5 in the bar direction S of the respective bus bar 4 is arranged between the two second electrical connections 6 of this bus bar 4. The bus bars 4 each have a bar body 9. The bar body 9 of the respective bus bar 4 comprises the connection ends 8 of this bus bar 4 located opposite one another in the bar direction S of the respective bus bar 4. The second electrical connections 6 of this bus bar 4 are electrically connected to one another by means of the bar body 9 of the respective bus bar 4. The first electrical connection 5 of this bus bar 4 in the bar direction S of the respective bus bar 4 is thereby arranged between the two second electrical connections 6 of this bus bar 4. There, the first electrical connection 5 of this bus bar 4 protrudes at an angle to the bar direction S of this bus bar 4 from the bar body 9 thereof. According to the shown example, the first electrical connections 5 of the bus bars 4 protrude essentially perpendicular to the bar direction of the respective bus bar 4 from the bar body 9 thereof. In the shown example, the first electrical connections 5 of the bus bars 4 thus protrude from the bus bodies 9 of the bus bars 4 in the axial direction A of the cover 1 or of the electrical machine 20, respectively.

As can be gathered particularly clearly from Figure 2, the bus bars 4 are arranged on top of one another in a stack-like manner in the axial direction A of the cover 1. A distance, in which (in the assembly of the cover 1 according to Figure 1 and 3) the electrically insulating lid material 3 is at least partially present, is thereby in each case present between two adjacent ones of the bus bars 4

According to the example of Figure 1, the bar directions S of the bus bars 4 cross one another, when looking along the axial direction A. Viewed in the axial direction A, the bar directions S of the bus bars 4 thereby cross one another in such a way that the bar directions S of each individual bus bar 4, viewed in the axial direction A, intersects the two bar directions S of the two remaining bus bars 4, in each case at a different point of intersection. A connection section 12 of the stator winding 13 of the electrical machine can in each case be electrically connected to the two second electrical connections 6 of at least one of the bus bars 4. In the example shown in Figures 1 and 2, each of the second electrical connections 6 of each of the bus bars 4 is formed in such a way that a connection section 12 of the stator winding 13 of the electrical machine 20 can in each case be electrically connected to each of the second electrical connections 6. The connection sections 12 of the stator windings 13 of the electrical machine 20 can thereby be electrically connected to the second electrical connections 6 of a respective one of the bus bars 4 in such a way that the stator windings 13, which can be connected to the respective bus bar 4, are arranged in the manner of an electrical parallel connection to the first electrical connection 5 of this bus bar 4.

A corresponding arrangement is made in an exemplary manner in the case of the electrical machine 20 of Figure 3. Here, a connection section 12 of one of the stator windings 13 of the electrical machine 20 is in each case electrically connected to each of the second electrical connections 6 of each of the bus bars 4 of the cover 1.

It can further be seen in Figures 1, 2, and 3 that all three bus bars 4 have an aperture 14, by means of which one of the second electrical connections 6 is formed. In the case of individual bus bars 4, an aperture 14 of this type can alternatively also be forgone. In the case of the bus bars 4, which are shown in an exemplary manner, two apertures 14 of this type are present in each case, so that each of the second electrical connections 6 of the bus bars 4 is formed by means of such an aperture 14. The aperture 14 is or the apertures 14 are, respectively, formed in such a way thereby that the connection section 12 of the electrical stator winding 13 of the electrical machine 20 can be accommodated in the aperture 14. Such connection sections 12 of the electrical stator windings 13 of the electrical machine 20, which are accommodated in the apertures 14, can be seen clearly in Figure 3.

In addition, Figures 1 to 3 show that the lid body 2 of the cover 1 comprises a bearing 15. The rotor 10 of the electrical machine 20 can be supported in the bearing 15 of the cover 1 so as to be rotatable relative to the stator, relative to the housing 16 and relative to the cover 1. In the case of the electrical machine 20 of Figure 3, the rotor 10 is rotatably supported in the bearing 15 of the lid body 2 of the cover 1 of the electrical machine 20 with a shaft encompassed by this rotor 10.

In addition, the invention relates to a method 17, which is illustrated in Figure 4 by means of a block diagram, for producing a cover 1 according to the invention, as it is shown in an exemplary manner in Figures 1 and 2 and as described above. The method 17 comprises two measures a) and b). According to measure a), at least two, in particular three, bus bars 4 are arranged. The bus bars 4 thereby each have a first electrical connection 5 and two electrical second connections 6, wherein the electrical connections 5, 6 of a respective one of the bus bars are electrically connected to one another by means of this bus bar 4. Measure b) of the method 17 consists in a molding of a lid body 2 of a lid material 3. The molding according to measure b) takes place in such a way that the bus bars 4 are embedded in the lid material 3 of the lid body 2. The embedding of the bus bars 4 is thereby performed in such a way in measure b) that the bus bars 4 are electrically insulated from one another by means of the electrically insulating lid material 3 in the cover generated after the molding of the lid body 2 according to measure b).

In addition, the invention relates to a method 18, which is also illustrated schematically in Figure 4, for producing an electrical machine 20, as it is shown in an exemplary manner in Figure 3 and as described above, and which is advantageously an electric motor for an electrical power assisted steering of a motor vehicle. The method 18 comprises a measure c), which consists in a provision of a cover 1, as it is illustrated for example in Figures 1 and 2 and as described above, and which is advantageously produced by means of the method 17, which is also illustrated in Figure 4 and described above. In addition, the method 18 comprises a measure d), according to which a housing 16 of the electrical machine 20 is provided. Stator windings 13, which each have a connection section 12, are present at a stator of the electrical machine 20. The stator windings 13 can thereby each be electrically energized via their connection section 12. The method 18 furthermore comprises a measure e), in the case of which an arranging of the cover 1 at the housing 16 takes place. The arranging of the cover 1 at the housing 16 thereby takes place in such a way according to measure e) that the housing 16 is closed by means of the cover 1. A further measure f) of the method 18 consists in an electrical connecting - which is advantageously performed by means of welding or soldering - of the connection section 12 of a respective one of the stator windings 13 to one of the second electrical connections 6 of one of the bus bars 4. The electrical connecting according to feature f) thereby takes place in such a way that the stator windings 13, which are connected to one of the bus bars 4, are arranged in the manner of a parallel connection to the first electrical connection 5 of this respective one of the bus bars 4.

## Claims

1. A cover (1) for closing a housing (16) of an electrical machine (20), in particular of an electric motor for an electrical power assisted steering of a motor vehicle,
- comprising a lid body (2) of an electrically insulating lid material (3), wherein
- the cover (1) comprises at least two, preferably three, bus bars (4), each of which has a first electrical connection (5) and two second electrical connections (6), wherein the first and the second electrical connections (5, 6) of a respective one of the bus bars (4) are electrically connected to one another by means of this bus bar (4),
- the bus bars (4) are embedded in the electrically insulating lid material (3) in such a way that the bus bars (4) are electrically insulated from one another by means of the electrically insulating lid material (3),
- each of the bus bars (4) in each case extends along a bar direction (S), wherein the bar direction (S) of each individual bus bar (4) runs at an angle (7) to the bar directions (S) of the, in particular two, other bus bars (4).

2. The cover (1) according to claim 1,
**characterized in that**
the bus bars (4) are each at least partially surrounded by the electrically insulating lid material (3).

3. The cover (1) according to claim 1 or 2,
**characterized in that**
the second electrical connections (6) of at least one bus bar (4), preferably of each of the bus bars (4), are arranged at two connection ends (8) of this bus bar (4), which are located opposite one another in the bar direction (S) of the respective bus bar (4).

4. The cover (1) according to any of the preceding claims,
**characterized in that**
the first electrical connection (5) of at least one, preferably of each of the bus bars (4) in the bar direction (S) of the respective bus bar (4) is arranged between the two second electrical connections (6) of this bus bar (4).

5. The cover (1) according to claim 3 or 4,
**characterized in that**
- the bus bars (4) each have a bar body (9), which encompasses the connection ends (8, 8) of this bus bar (4) located opposite one another along the bar direction (S) of the respective bus bar (4), and which electrically connects the second electrical connections (6) of this bus bar (4),
- wherein the first electrical connection (5) of this bus bar (4) is arranged between the second electrical connections (6) of this bus bar (4) and protrudes at an angle, in particular essentially perpendicular, to the bar direction (S) of this bus bar (4) from the bar body (9) thereof.

6. The cover (1) according to one of the preceding claims,
**characterized in that**
the bus bars (4) are arranged on top of one another in a stack-like manner in an axial direction (A) of the cover (1), wherein a distance, within which the electrically insulating lid material (3) is at least partially present, is in each case present in the axial direction (A) between two adjacent bus bars (4).

7. The cover (1) according to claim 6,
**characterized in that**
the bar directions (S) of the bus bars (4) cross one another, viewed in the axial direction (A), in such a way that the bar direction (S) of each individual one of the bus bars (4), viewed in the axial direction (A), intersects the, in particular two, bar direction/s (S) of the, preferably two, remaining bus bars (4), in each case at a, in particular different, point of intersection (11).

8. The cover (1) according to claim 6 or 7,
**characterized in that**
the first electrical connection (5) of at least one, preferably of each of the bus bars (4), protrudes from the cover (1) along the axial direction (A).

9. The cover (1) according to one of the preceding claims,
**characterized in that**
a connection section (12) of a stator winding (13) of an electrical machine (20) can in each case be electrically connected to the two second electrical connections (6) of at least one, preferably of each of the bus bars (4), so that the stator windings (13), which can be connected to the respective bus bar (4), are arranged in the manner of an electrical parallel connection to the first electrical connection (5) of this bus bar (4).

10. The cover (1) according to one of the preceding claims,
**characterized in that**
an aperture (14), in which a connection section (12) of an electrical stator winding (13) can be accommodated, is formed in the respective bus bar (4) for forming at least one of the second connections (6) of at least one of the bus bars (4).

11. The cover (1) according to one of the preceding claims,
**characterized in that**
the lid body (2) comprises a bearing (15), in which a rotor (10) of an electrical machine (10) can be rotatably supported.

12. An electrical machine (20), in particular electric motor for an electrical power assisted steering of a motor vehicle,
- comprising a housing (16), in particular housing a stator of the electrical machine (20), at which stator electrical stator windings (13) are present, wherein the stator windings (13) can each be electrically energized via a connection section (12),
- comprising a rotor (10), which is rotatably supported relative to the stator (16) and the housing (16),
- comprising a cover (1) according to one of the preceding claims, which closes the housing (16),
- wherein a connection section (12) of one of the stator windings (13) is in each case electrically connected to each of the second electrical connections (6) of each of the bus bars (4) of the cover (1).

13. A method (17) for producing a cover (1) according to one of claims 1 to 11, comprising the following measures:
a) arranging at least two, preferably three, bus bars (4), each of which has a first electrical connection (5) and two electrical second connections (6), wherein the electrical connections (5, 6) of a respective one of the bus bars (4) are electrically connected to one another by means of this bus bar (4),
b) molding, in particular injection molding, a lid body (2) of an electrically insulating lid material (3), so that the bus bars (4) are embedded in the lid material (3) of the lid body (2) in such a way that the bus bars (4) are electrically insulated from one another by means of the electrically insulating lid material (3) in the cover (1) generated after the molding of the lid body (2) according to measure b).

14. A method (18) for producing an electrical machine (20), in particular an electric motor for an electrical power assisted steering of a motor vehicle according to claim 12, further comprising the following measures:
c) providing a cover (1) according to one of claims 1 to 11, which is preferably produced by means of the method (17) according to claim 13,
d) providing a housing (16) of the electrical machine (20), wherein a stator of the electrical machine (20) comprises electrical stator windings (13) each having a connection section (12) are present, wherein the stator windings (13) can each be electrically energized via their connection section (12),
e) arranging the cover (1) at the housing (16), so that the housing (16) is closed by means of the cover (1),
f) electrical connecting, in particular welding the connection section (12) of a respective one of the stator windings (13) to one of the second electrical connections (6) of one of the bus bars (4), so that the stator windings (13), which are connected to one of the bus bars (4), are arranged in the manner of a parallel connection to the first electrical connection (5) of this respective one of the bus bars (4).

## Patentansprüche

1. Abdeckung (1) zum Verschließen eines Gehäuses (16) einer elektrischen Maschine (20), insbesondere eines Elektromotors für eine elektrische Servolenkung eines Kraftfahrzeugs,
- umfassend einen Deckelkörper (2) aus einem elektrisch isolierenden Deckelmaterial (3), wobei
- die Abdeckung (1) mindestens zwei, vorzugsweise drei, Stromschienen (4) umfasst, von denen jede einen ersten elektrischen Anschluss (5) und zwei zweite elektrische Anschlüsse (6) aufweist, wobei der erste und die zweiten elektrischen Anschlüsse (5, 6) einer jeweiligen der Stromschienen (4) mittels dieser Stromschiene (4) elektrisch miteinander verbunden sind,
- die Stromschienen (4) in das elektrisch isolierende Deckelmaterial (3) eingebettet sind, sodass die Stromschienen (4) mittels des elektrisch isolierenden Deckelmaterials (3) elektrisch voneinander isoliert sind,
- jede der Stromschienen (4) sich in jedem Fall entlang einer Schienenrichtung (S) erstreckt, wobei die Schienenrichtung (S) jeder einzelnen Stromschiene (4) in einem Winkel (7) zu den Schienenrichtungen (S) der, insbesondere zwei, anderen Stromschienen (4) verläuft.

2. Abdeckung (1) nach Anspruch 1,
**dadurch gekennzeichnet, dass**
die Stromschienen (4) jeweils mindestens teilweise von dem elektrisch isolierenden Deckelmaterial (3) umgeben sind.

3. Abdeckung (1) nach Anspruch 1 oder 2,
**dadurch gekennzeichnet, dass**
die zweiten elektrischen Anschlüsse (6) mindestens einer Stromschiene (4), vorzugsweise jeder der Stromschienen (4), an zwei Anschlussenden (8) dieser Stromschiene (4) angeordnet sind, die sich in der Schienenrichtung (S) der jeweiligen Stromschiene (4) einander gegenüberliegend befinden.

4. Abdeckung (1) nach einem der vorstehenden Ansprüche,
**dadurch gekennzeichnet, dass**
der erste elektrische Anschluss (5) mindestens einer, vorzugsweise jeder der Stromschienen (4) in der Schienenrichtung (S) der jeweiligen Stromschiene (4) zwischen den beiden zweiten elektrischen Anschlüssen (6) dieser Stromschiene (4) angeordnet ist.

5. Abdeckung (1) nach Anspruch 3 oder 4,
**dadurch gekennzeichnet, dass**
- die Stromschienen (4) jeweils einen Schienenkörper (9) aufweisen, der die Anschlussenden (8, 8) dieser Stromschiene (4), die sich entlang der Schienenrichtung (S) der jeweiligen Stromschiene (4) einander gegenüberliegend befinden, umschließt und der die zweiten elektrischen Anschlüsse (6) dieser Stromschiene (4) elektrisch verbindet,
- wobei der erste elektrische Anschluss (5) dieser Stromschiene (4) zwischen den zweiten elektrischen Anschlüsse (6) dieser Stromschiene (4) angeordnet ist und in einem Winkel, insbesondere im Wesentlichen senkrecht zur Schienenrichtung (S) dieser Stromschiene (4) von deren Schienenkörper (9) hervorsteht.

6. Abdeckung (1) nach einem der vorstehenden Ansprüche,
**dadurch gekennzeichnet, dass**
die Stromschienen (4) in einer axialen Richtung (A) der Abdeckung (1) stapelartig übereinander angeordnet sind, wobei ein Abstand, innerhalb dessen das elektrisch isolierende Deckelmaterial (3) mindestens teilweise vorhanden ist, in jedem Fall in der Achsrichtung (A) zwischen zwei angrenzenden Stromschienen (4) vorhanden ist.

7. Abdeckung (1) nach Anspruch 6,
**dadurch gekennzeichnet, dass**
die Schienenrichtungen (S) der Stromschienen (4) einander, in der axialen Richtung (A) betrachtet, kreuzen, sodass die Schienenrichtung (S) jeder einzelnen der Stromschienen (4), in der axialen Richtung (A) betrachtet, die insbesondere zwei, Schienenrichtung/en (S) der, vorzugsweise zwei verbleibenden Stromschienen (4) in jedem Fall in einem insbesondere unterschiedlichen Schnittpunkt (11) schneidet.

8. Abdeckung (1) nach Anspruch 6 oder 7,
**dadurch gekennzeichnet, dass**
der erste elektrische Anschluss (5) mindestens einer, vorzugsweise jeder der Stromschienen (4) entlang der axialen Richtung (A) aus der Abdeckung (1) hervorsteht.

9. Abdeckung (1) nach einem der vorstehenden Ansprüche,
**dadurch gekennzeichnet, dass**
ein Anschlussabschnitt (12) einer Statorwicklung (13) einer elektrischen Maschine (20) in jedem Fall elektrisch mit den beiden zweiten elektrischen Anschlüsse (6) mindestens einer, vorzugsweise jeder der Stromschienen (4) verbunden werden kann, sodass die Statorwicklungen (13), die mit der jeweiligen Stromschiene (4) verbunden werden können, in der Art einer elektrischen Parallelverbindung zum ersten elektrischen Anschluss (5) dieser Stromschiene (4) angeordnet sind.

10. Abdeckung (1) nach einem der vorstehenden Ansprüche,
**dadurch gekennzeichnet, dass**
eine Öffnung (14), in der ein Anschlussabschnitt (12) einer elektrischen Statorwicklung (13) untergebracht werden kann, in der jeweiligen Stromschiene (4) zum Bilden von mindestens einem der zweiten Anschlüsse (6) mindestens einer der Stromschienen (4) gebildet ist.

11. Abdeckung (1) nach einem der vorstehenden Ansprüche,
**dadurch gekennzeichnet, dass**
der Deckelkörper (2) ein Lager (15) umfasst, in dem ein Rotor (10) einer elektrischen Maschine (10) drehbar gelagert werden kann.

12. Elektrische Maschine (20), insbesondere ein Elektromotor für eine elektrische Servolenkung eines Kraftfahrzeugs,
- umfassend ein Gehäuse (16), insbesondere ein Gehäuse eines Stators der elektrischen Maschine (20), wobei an dem Stator elektrische Statorwicklungen (13) vorhanden sind, wobei die Statorwicklungen (13) jeweils über einen Anschlussabschnitt (12) elektrisch erregbar sind,
- umfassend einen Rotor (10), der in Bezug zum Stator (16) und dem Gehäuse (16) drehbar gelagert ist,
- umfassend eine Abdeckung (1) nach einem der vorstehenden Ansprüche, der das Gehäuse (16) verschließt,
- wobei ein Anschlussabschnitt (12) einer der Statorwicklungen (13) in jedem Fall elektrisch mit jeder der zweiten elektrischen Anschlüsse (6) jeder der Stromschienen (4) der Abdeckung (1) verbunden ist.

13. Verfahren (17) zum Herstellen einer Abdeckung (1) nach einem der Ansprüche 1 bis 11, das die folgenden Maßnahmen umfasst:
a) Anordnen von mindestens zwei, vorzugsweise drei, Stromschienen (4), von denen jede einen ersten elektrischen Anschluss (5) und zwei zweite elektrische Anschlüsse (6) aufweist, wobei die elektrischen Anschlüsse (5, 6) einer jeweiligen der Stromschienen (4) mittels dieser Stromschiene (4) elektrisch miteinander verbunden sind,
b) Gießen, insbesondere Spritzgießen, eines Deckelkörpers (2) aus einem elektrisch isolierenden Deckelmaterial (3), sodass die Stromschienen (4) in dem Deckelmaterial (3) des Verschlusskörpers (2) eingebettet sind, sodass die Stromschienen (4) mittels des elektrisch isolierenden Deckelmaterials (3) in der Abdeckung (1), der nach dem Formen des Deckelkörpers (2) gemäß Maßnahme b) erzeugt wird, elektrisch voneinander isoliert werden.

14. Verfahren (18) zum Herstellen einer elektrischen Maschine (20), insbesondere eines Elektromotors für eine elektrische Servolenkung eines Kraftfahrzeugs nach Anspruch 12, das weiter die folgenden Maßnahmen umfasst:
c) Bereitstellen einer Abdeckung (1) nach einem der Ansprüche 1 bis 11, die vorzugsweise mittels des Verfahrens (17) nach Anspruch 13 hergestellt wird,
d) Bereitstellen eines Gehäuses (16) der elektrischen Maschine (20), wobei ein Stator der elektrischen Maschine (20) elektrische Statorwicklungen (13) umfasst, die jeweils einen Anschlussabschnitt (12) aufweisen, wobei die Statorwicklungen (13) jeweils über ihren Anschlussabschnitt (12) elektrisch erregbar sind,
e) Anordnen der Abdeckung (1) an dem Gehäuse (16), so dass das Gehäuse (16) mittels der Abdeckung (1) verschlossen wird,
f) elektrisches Verbinden, insbesondere Verschweißen, des Anschlussabschnitts (12) einer jeweiligen der Statorwicklungen (13) mit einem der zweiten elektrischen Anschlüsse (6) einer der Stromschienen (4), sodass die Statorwicklungen (13), die mit einer der Stromschienen (4) verbunden sind, in die Art einer Parallelverbindung zum ersten elektrischen Anschluss (5) dieser jeweiligen einen der Stromschienen (4) angeordnet sind.

## Revendications

1. Couvercle (1) de fermeture d'un boîtier (16) d'une machine électrique (20), notamment d'un moteur électrique pour une direction à assistance électrique d'un véhicule automobile,
- comprenant un corps de couvercle (2) en un matériau de couvercle électriquement isolant (3), dans lequel
- le couvercle (1) comprend au moins deux, de préférence trois, barres omnibus (4), chacune présentant une première connexion électrique (5) et deux secondes connexions électriques (6), dans lequel les première et secondes connexions électriques (5, 6) de l'une respective des barres omnibus (4) sont connectées électriquement les unes aux autres au moyen de cette barre omnibus (4),
- les barres omnibus (4) sont incorporées dans le matériau de couvercle électriquement isolant (3) de sorte que les barres omnibus (4) soient isolées électriquement les unes des autres au moyen du matériau de couvercle électriquement isolant (3),
- chacune des barres omnibus (4) s'étend dans tous les cas le long d'une direction de barre (S), dans lequel la direction de barre (S) de chaque barre omnibus individuelle (4) s'étend selon un angle (7) par rapport aux directions de barre (S) des, en particulier deux, autres barres omnibus (4).

2. Couvercle (1) selon la revendication 1,
**caractérisé en ce que**
les barres omnibus (4) sont chacune au moins partiellement entourées par le matériau de couvercle électriquement isolant (3).

3. Couvercle (1) selon la revendication 1 ou 2,
**caractérisé en ce que**
les secondes connexions électriques (6) d'au moins une barre omnibus (4), de préférence de chacune des barres omnibus (4), sont agencées à deux extrémités de connexion (8) de cette barre omnibus (4), qui sont situées en face l'une de l'autre dans la direction de barre (S) de la barre omnibus (4) respective.

4. Couvercle (1) selon l'une quelconque des revendications précédentes,
**caractérisé en ce que**
la première connexion électrique (5) d'au moins une, de préférence de chacune des barres omnibus (4) dans la direction de barre (S) de la barre omnibus (4) respective est agencée entre les deux secondes connexions électriques (6) de cette barre omnibus (4).

5. Couvercle (1) selon la revendication 3 ou 4,
**caractérisé en ce que**
- les barres omnibus (4) présentent chacune un corps de barre (9), qui englobe les extrémités de connexion (8, 8) de cette barre omnibus (4) situées en face l'une de l'autre le long de la direction de barre (S) de la barre omnibus (4) respective, et qui relie électriquement les secondes connexions électriques (6) de cette barre omnibus (4),
- dans lequel la première connexion électrique (5) de cette barre omnibus (4) est agencée entre les secondes connexions électriques (6) de cette barre omnibus (4) et fait saillie à un angle, en particulier sensiblement perpendiculaire, par rapport à la direction de barre (S) de cette barre omnibus (4) à partir du corps de barre (9) de celle-ci.

6. Couvercle (1) selon l'une des revendications précédentes,
**caractérisé en ce que**
les barres omnibus (4) sont agencées les unes sur les autres de manière empilée dans une direction axiale (A) du couvercle (1), dans lequel une distance, sur laquelle le matériau de couvercle électriquement isolant (3) est au moins partiellement présent, existe dans tous les cas dans la direction axiale (A) entre deux barres omnibus adjacentes (4).

7. Couvercle (1) selon la revendication 6,
**caractérisé en ce que**
les directions de barre (S) des barres omnibus (4) se croisent, vues dans la direction axiale (A), de telle sorte que la direction de barre (S) de chacune des barres omnibus (4), vue dans la direction axiale (A), coupe la, en particulier deux, direction(s) de barre (S) de la, de préférence des deux, barre(s) omnibus restante(s) (4), de préférence, dans tous les cas en un point d'intersection (11), en particulier différent.

8. Couvercle (1) selon la revendication 6 ou 7,
**caractérisé en ce que**
la première connexion électrique (5) d'au moins une, de préférence de chacune des barres omnibus (4), dépasse du couvercle (1) le long de la direction axiale (A).

9. Couvercle (1) selon l'une des revendications précédentes,
**caractérisé en ce que**
une section de connexion (12) d'un enroulement de stator (13) d'une machine électrique (20) peut, dans tous les cas, être connectée électriquement aux deux secondes connexions électriques (6) d'au moins une, de préférence de chacune des barres omnibus (4), de sorte que les enroulements de stator (13), qui peuvent être connectés à la barre omnibus (4) respective, soient agencés à la manière d'une connexion électrique parallèle à la première connexion électrique (5) de cette barre omnibus (4).

10. Couvercle (1) selon l'une des revendications précédentes,
**caractérisé en ce que**
une ouverture (14), dans laquelle une section de connexion (12) d'un enroulement de stator électrique (13) peut être logée, est formée dans la barre omnibus (4) respective pour former au moins l'une des secondes connexions (6) d'au moins l'une des barres omnibus (4).

11. Couvercle (1) selon l'une des revendications précédentes,
**caractérisé en ce que**
le corps de couvercle (2) comprend un palier (15) dans lequel un rotor (10) d'une machine électrique (10) peut être supporté de manière rotative.

12. Machine électrique (20), en particulier un moteur électrique pour une direction à assistance électrique d'un véhicule automobile,
- comprenant un boîtier (16), en particulier logeant un stator de la machine électrique (20), au niveau duquel sont présents des enroulements de stator électriques (13), dans laquelle les enroulements de stator (13) peuvent chacun être alimentés électriquement via une section de connexion (12),
- comprenant un rotor (10) qui est supporté de manière rotative par rapport au stator (16) et au boîtier (16),
- comprenant un couvercle (1) selon l'une des revendications précédentes qui ferme le boîtier (16),
- dans laquelle une section de connexion (12) d'un des enroulements de stator (13) est dans tous les cas connectée électriquement à chacune des secondes connexions électriques (6) de chacune des barres omnibus (4) du couvercle (1).

13. Procédé (17) de production d'un couvercle (1) selon l'une des revendications 1 à 11, comprenant les mesures suivantes :
a) l'agencement d'au moins deux, de préférence trois, barres omnibus (4), chacune présentant une première connexion électrique (5) et deux secondes connexions électriques (6), dans lequel les connexions électriques (5, 6) de l'une respective des barres omnibus (4) sont connectées électriquement les unes aux autres au moyen de cette barre omnibus (4),
b) le moulage, en particulier le moulage par injection, d'un corps de couvercle (2) en un matériau de couvercle électriquement isolant (3), de sorte que les barres omnibus (4) soient incorporées dans le matériau de couvercle (3) du corps de couvercle (2) de telle manière que les barres omnibus (4) sont isolées électriquement les unes des autres au moyen du matériau de couvercle électriquement isolant (3) dans le couvercle (1) produit après le moulage du corps de couvercle (2) selon la mesure b).

14. Procédé (18) de production d'une machine électrique (20), en particulier d'un moteur électrique pour une direction à assistance électrique d'un véhicule automobile selon la revendication 12, comprenant en outre les mesures suivantes :
c) la fourniture d'un couvercle (1) selon l'une des revendications 1 à 11 qui est de préférence produit au moyen du procédé (17) selon la revendication 13,
d) la fourniture d'un boîtier (16) de la machine électrique (20), dans lequel un stator de la machine électrique (20) comprend des enroulements de stator électriques (13) présentant chacun une section de connexion (12), dans lequel les enroulements de stator (13) peuvent chacun être alimentés électriquement via leur section de connexion (12),
e) l'agencement du couvercle (1) au niveau du boîtier (16), de sorte que le boîtier (16) soit fermé au moyen du couvercle (1),
f) la connexion électrique, en particulier le soudage de la section de connexion (12) de l'un respectif des enroulements de stator (13) à l'une des secondes connexions électriques (6) de l'une des barres omnibus (4), de sorte que les enroulements de stator (13), qui sont connectés à l'une des barres omnibus (4), soient agencés à la manière d'une connexion parallèle à la première connexion électrique (5) de ladite respective des barres omnibus (4).
